# EUROPÄISCHE PATENTSCHRIFT

(11) **EP 2 767 693 B1**
(45) Veröffentlichungstag und Bekanntmachung des Hinweises auf die Patenterteilung: **13.01.2016**
(21) Anmeldenummer: 14153923.9
(22) Anmeldetag: 05.02.2014
(51) Int. Cl.: F02B 29/04

(54) **Frischluftanlage**
Air intake system
Système d'admission d'air

(30) Priorität: 14.02.2013 DE 102013202448
(43) Veröffentlichungstag der Anmeldung: 20.08.2014
(73) Patentinhaber: Mahle International GmbH, 70376 Stuttgart (DE)
(72) Erfinder: Brand, Winfried, 70378 Stuttgart (DE); Morgillo, Ivano, 71543 Neuhütten (DE)
(74) Vertreter: BRP Renaud & Partner mbB Rechtsanwälte Patentanwälte Steuerberater

(56) Entgegenhaltungen:
- EP-A1- 0 285 504
- EP-A1- 0 714 797
- EP-A1- 1 785 609
- EP-A1- 2 014 892
- WO-A1-2012/159730
- DE-A1- 19 853 455
- FR-A1- 2 645 209
- US-A- 4 823 868

## Beschreibung

Die vorliegende Erfindung betrifft eine Frischluftanlage zur Versorgung von Brennräumen einer aufgeladenen Brennkraftmaschine mit Frischluft, insbesondere in einem Kraftfahrzeug.

Eine derartige Frischluftanlage umfasst üblicherweise ein Gehäuse, durch das ein Frischluftpfad hindurchführt. Bei einer aufgeladenen Brennkraftmaschine ist es üblich, die aufgeladene Frischluft, also die Ladeluft, vor dem Eintritt in die Brennräume zu kühlen. Hierzu kann eine derartige Frischluftanlage mit einem Ladeluftkühler ausgestattet sein, der von der Frischluft durchströmbar ist und der im Frischluftpfad angeordnet ist. Dabei kann der Ladeluftkühler auf unterschiedliche Weise in das Gehäuse der Frischluftanlage eingesetzt sein. Denkbar ist grundsätzlich eine Einschublösung, bei welcher der Ladeluftkühler seitlich, also quer zur Strömungsrichtung, in das Gehäuse eingeschoben bzw. eingesetzt wird. Hierzu kann das Gehäuse eine seitliche Einführöffnung aufweisen, durch die der Ladeluftkühler quer zum Frischluftpfad seitlich in das Gehäuse einsetzbar ist. Bei einer derartigen Einschublösung kann die Einführöffnung beispielsweise mit einem äußeren Endbereich des Ladeluftkühlers verschlossen werden, der gleichzeitig Anschlüsse zum Zuführen und Abführen eines Kühlmittels aufweist. Um eine hinreichende Fixierung des Ladeluftkühlers am Gehäuse im Bereich der Einführöffnung zu realisieren und um eine hinreichende Abdichtung zwischen Ladeluftkühler und Gehäuse im Bereich der Einführöffnung zu erreichen, kann ein vergleichsweise großer Aufwand betrieben werden.

Beispiele für Ladeluftkühler, die in das Gehäuse einer Frischluftanlage einer Brennkraftmaschine eingeschoben werden, sind in der EP 2 014 892 A1 oder der FR 2 645 209 A1 zu finden.

Die vorliegende Erfindung beschäftigt sich mit dem Problem, für eine Frischluftanlage der eingangs genannten Art eine verbesserte Ausführungsform anzugeben, die sich insbesondere durch eine preiswerte Herstellbarkeit auszeichnet. Dieses Problem wird erfindungsgemäß durch den Gegenstand des unabhängigen Anspruchs gelöst. Vorteilhafte Ausführungsformen sind Gegenstand der abhängigen Ansprüche.

Erfindungsgemäß wird der Ladeluftkühler im Bereich der Einführöffnung mit Hilfe eines separaten Halterahmens am Gehäuse fixiert.

Mit Hilfe eines derartigen Halterahmens, der bezüglich des Gehäuses und bezüglich des Ladeluftkühlers ein separates Bauteil repräsentiert, lässt sich besonders einfach und preiswert eine hinreichende Fixierung sowie eine hinreichende Abdichtung zwischen Ladeluftkühler und Gehäuse im Bereich der Einführöffnung realisieren. Zu diesem Zweck ist der Ladeluftkühler an seinem äußeren Endbereich mit einem umlaufenden Halteflansch ausgestattet, der nach dem Einschieben des Ladeluftkühlers in das Gehäuse bei Erreichen seiner eingesetzten Endstellung von außen an einem Halterand des Gehäuses zur Anlage kommt, der die Einführöffnung einfasst. Der separate Halterahmen wird nun ebenfalls von außen angesetzt und am Gehäuse fixiert, wobei der Halteflansch zwischen dem Halterand und dem Halterahmen geklemmt, also mit Vorspannung gehalten ist. Die Vorspannung ist dabei parallel zur Einschubrichtung des Ladeluftkühlers orientiert. Die Fixierung des Ladeluftkühlers am Gehäuse erfolgt mit Hilfe des Halterahmens und lässt sich vergleichsweise einfach realisieren. Bestenfalls muss nur der Halterahmen angebracht werden, um den Ladeluftkühler am Gehäuse zu fixieren. Die unmittelbare Fixierung des Halterahmens am Gehäuse, insbesondere im Bereich des Halterands, führt somit zu einer mittelbaren Fixierung des Ladeluftkühlers am Gehäuse bzw. am Halterand. Vorteilhaft kann auf weitere Befestigungselemente zum Fixieren des Ladeluftkühlers im Bereich der Einführöffnung am Gehäuse verzichtet werden. Dementsprechend kommt eine vorteilhafte Ausführungsform am äußeren Endbereich des Ladeluftkühlers ohne weitere Befestigungsmittel aus, die den Ladeluftkühler am Gehäuse befestigen.

Zweckmäßig ist der Halterahmen geschlossen umlaufend ausgestaltet, so dass entlang des gesamten Halteflansches eine Fixierung des Ladeluftkühlers am Gehäuse realisierbar ist.

Bei einer anderen Ausführungsform können im Bereich des Halterahmens am Gehäuse Rastelemente vorgesehen sein, die mit am Halterahmen ausgebildeten Gegenrastelementen zum Fixieren des Halterahmens am Gehäuse und zum Klemmen des Halteflansches zusammenwirken. Insbesondere können derartige Rastelemente und Gegenrastelemente somit eine Verrastung definieren, die durch Andrücken des Halterahmens am Gehäuse zusammenwirken und selbsttätig miteinander verrasten. Hierdurch vereinfacht sich die Fixierung des Halterahmens am Gehäuse. Insbesondere kann auf separate Befestigungsmittel zum Fixieren des Halterahmens am Gehäuse sowie auf zusätzliche Werkzeuge verzichtet werden. Insbesondere lässt sich der Halterahmen somit werkzeuglos am Gehäuse befestigen.

Besonders preiswert und somit vorteilhaft ist eine Weiterbildung, bei welcher die Rastelemente integral am Gehäuse ausgeformt sind. Dabei kann das Gehäuse beispielsweise als Spritzgussbauteil aus Kunststoff hergestellt sein, so dass sich die Rastelemente besonders einfach in das Spritzgussteil integrieren lassen.

Bei einer anderen vorteilhaften Weiterbildung können die Rastelemente einen entlang des Halterands umlaufenden, vom Gehäuse nach außen abstehenden Haltekragen aufweisen, der mehrere Rastöffnungen enthält. Die Gegenrastelemente können dann zweckmäßig zu den Rastöffnungen komplementäre Rasthaken aufweisen, die insbesondere quer zur Einführrichtung federelastisch ausgestaltet sein können, die in die Rastöffnungen eingreifen und die den Halterahmen am Haltekragen fixieren. Die Rastöffnungen können entweder als Vertiefungen, die den Haltekragen nicht durchsetzen, oder als Durchgangsöffnungen konzipiert sein, die den Haltekragen quer zur Einführrichtung durchsetzen. Durch die Verwendung eines derartigen Haltekragens kann die Fixierung zwischen Halterahmen und Gehäuse entlang der gesamten Einführöffnung umlaufend realisiert werden. Zweckmäßig sind dabei die Rastelemente und die Gegenrastelemente in der Umlaufrichtung weitgehend gleichmäßig verteilt.

Bei einer anderen vorteilhaften Weiterbildung kann der Halterahmen eine umlaufende Rastnut aufweisen, in der die Rasthaken angeordnet sind und in die der Haltekragen eintaucht. Hierdurch kann eine exakte Positionierung zwischen Haltekragen und Gehäuse durch das Zusammenwirken von Rastnut und Haltekragen realisiert werden.

Bei einer anderen vorteilhaften Ausführungsform kann der Halterand an einer dem Halteflansch zugewandten Außenseite eine vollständig umlaufende Dichtungsnut aufweisen, in der eine am Halteflansch anliegende Dichtung angeordnet ist. Diese gehäuseseitige Dichtungsnut kann im Folgenden auch als Gehäusedichtungsnut bezeichnet werden. Die darin eingesetzte Dichtung kann im Folgenden auch als Gehäusedichtung bezeichnet werden. Mit Hilfe dieser Gehäusedichtung, die eine parallel zur Einführrichtung wirkende Axialdichtung repräsentiert, lässt sich eine effiziente Dichtung zwischen Ladeluftkühler und Gehäuse realisieren.

Gemäß einer anderen Ausführungsform, die zusätzlich oder alternativ zur vorstehenden Ausführungsform realisierbar ist, kann der Halterahmen an einer dem Halteflansch zugewandten Innenseite eine vollständig umlaufende Dichtungsnut aufweisen, in der eine am Halteflansch anliegende Dichtung angeordnet ist. Diese rahmenseitige Dichtungsnut kann im Folgenden als Rahmendichtungsnut bezeichnet werden. Die darin eingesetzte Dichtung kann im Folgenden auch als Rahmendichtung bezeichnet werden. Mit Hilfe einer derartigen Rahmendichtung, die als parallel zur Einführrichtung wirkende Axialdichtung konfiguriert ist, lässt sich eine effiziente Vorspannung des Halterahmens gegen den Halteflansch des Ladeluftkühlers parallel zur Einführrichtung realisieren. Die Dichtungsfunktion ist bei dieser Rahmendichtung von untergeordneter Bedeutung. Besonders vorteilhaft ist eine Kombination der beiden vorstehenden Ausführungsformen, so dass sowohl eine Gehäusedichtung als auch eine Rahmendichtung vorhanden sind. In diesem Fall lässt sich die Vorspannung zum Klemmen des Halteflansches mit Hilfe der beiden Dichtungen realisieren bzw. verstärken.

Erfindungsgemäß sind ein Zuführanschluss zum Zuführen eines Kühlmittels zum Ladeluftkühler und ein Abführanschluss zum Abführen des Kühlmittels vom Ladeluftkühler am äußeren Endbereich des Ladeluftkühlers angeordnet vorzugsweise innerhalb eines vom Halteflansch eingefassten Bereichs. Zweckmäßig sind Zuführanschluss und Abführanschluss bezüglich der Einschubrichtung des Ladeluftkühlers am äußeren Endbereich stirnseitig angeordnet. Durch diese Bauweise entfallen separate Durchführungsöffnungen im Gehäuse für die Kühlmittelanschlüsse des Ladeluftkühlers.

Gemäß einer anderen zweckmäßigen Ausführungsform kann das Gehäuse an einer der Einführöffnung gegenüberliegenden Wand Positionierelemente aufweisen, die mit einem inneren Endbereich des Ladeluftkühlers zum Positionieren des Ladeluftkühlers im Gehäuse zusammenwirken. Auf diese Weise ist der Ladeluftkühler an seinen beiden Endbereichen relativ zum Gehäuse positioniert und somit hinreichend fixiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Frischluftanlage,
- Fig. 2: eine leicht isometrische Schnittansicht der Frischluftanlage im Bereich einer Einführöffnung zum Einsetzen eines Ladeluftkühlers,
- Fig. 3: eine isometrische Ansicht des Ladeluftkühlers im Bereich der Einführöffnung.

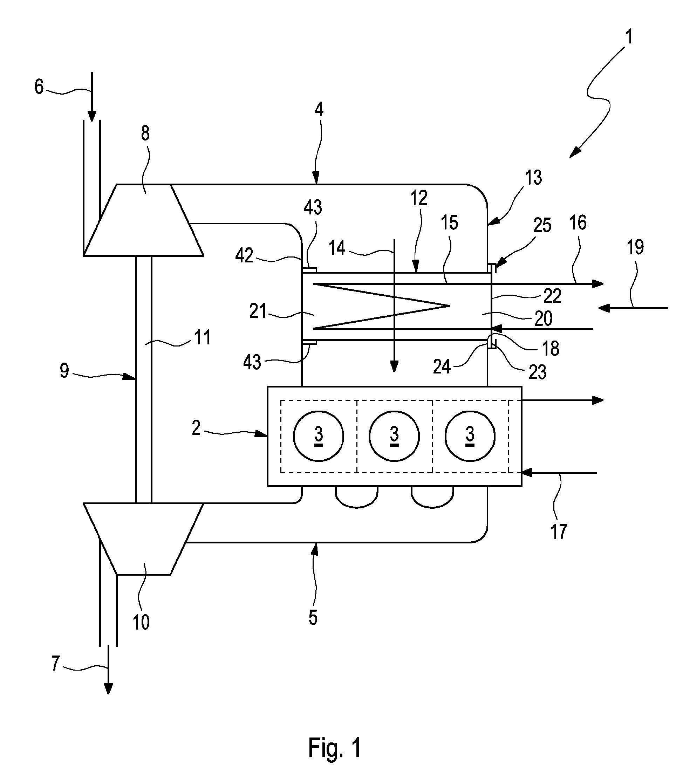

Entsprechend Fig. 1 umfasst eine Brennkraftmaschine 1 einen Motorblock 2, in dem mehrere Brennräume 3 angeordnet sind. Die Brennräume 3 sind dabei durch Zylinder gebildet, in denen Kolben hubverstellbar angeordnet sind. Die Brennkraftmaschine 1 umfasst ferner eine Frischluftanlage 4 zum Zuführen von Frischluft zu den Brennräumen 3 sowie eine Abgasanlage 5 zum Abführen von Abgas von den Brennräumen 3. Ein entsprechender Frischluftstrom 6 ist in Fig. 1 durch einen Pfeil angedeutet. Ein entsprechender Abgasstrom 7 ist in Fig. 1 durch einen Pfeil angedeutet. Die Brennkraftmaschine 1 ist hier als aufgeladene Brennkraftmaschine 1 konfiguriert. Hierzu ist die Brennkraftmaschine 1 mit einer entsprechenden Ladeeinrichtung ausgestattet, die hier durch einen Verdichter 8 eines Abgasturboladers 9 gebildet ist. Der Verdichter 8 ist hierzu in der Frischluftanlage 4 angeordnet. Der Verdichter 8 bzw. ein hier nicht näher dargestelltes Verdichterrad ist beim Abgasturbolader 9 mit Hilfe einer Turbine 10 bzw. mit einem hier nicht dargestellten Turbinenrad angetrieben, wozu Verdichter 8 und Turbine 10 mittels einer gemeinsamen Welle 11 antriebsverbunden sind. Die Turbine 10 ist in der Abgasanlage 5 angeordnet.

Es ist klar, dass die Frischluftanlage 4 weitere Komponenten, wie z.B. eine Drosseleinrichtung sowie ein Frischluftfilter, enthalten kann. Ferner ist klar, dass auch die Abgasanlage 5 weitere Komponenten, wie z.B. ein Partikelfilter, ein Katalysator und einen Schalldämpfer, enthalten kann.

Die mit Hilfe des Verdichters 8 komprimierte Luft wird durch ihre Verdichtung gleichzeitig erwärmt. Um die Ladeluft wieder zu kühlen, ist in der Frischluftanlage 4 ein Ladeluftkühler 12 angeordnet, stromab des Verdichters 8. Zur Unterbringung des Ladeluftkühlers 12 weist die Frischluftanlage 4 ein Gehäuse 13 auf, durch das ein Frischluftpfad 14 hindurchführt, der in Fig. 1 durch einen Pfeil symbolisiert ist. Der Ladeluftkühler 12 ist nun im Gehäuse 13 so angeordnet, dass der Frischluftpfad 14 durch den Ladeluftkühler 12 hindurchführt. Dementsprechend ist der Ladeluftkühler 12 von der Frischluft durchströmbar. Der Ladeluftkühler 12 enthält außerdem einen Kühlmittelpfad 15, der auf geeignete Weise mit dem Frischluftpfad 14 wärmeübertragend, jedoch mediengetrennt gekoppelt ist. Der Kühlmittelpfad 15 kann an einen Ladeluftkühlkreis 16 angeschlossen sein. Dieser Ladeluftkühlkreis 16 kann wärmeübertragend mit einem Motorkühlkreis 17 gekoppelt sein, der zur Kühlung des Motorblocks 2 dient. Ebenso kann es sich beim Ladeluftkühlkreis 16 und beim Motorkühlkreis 17 um separate Kühlkreise handeln.

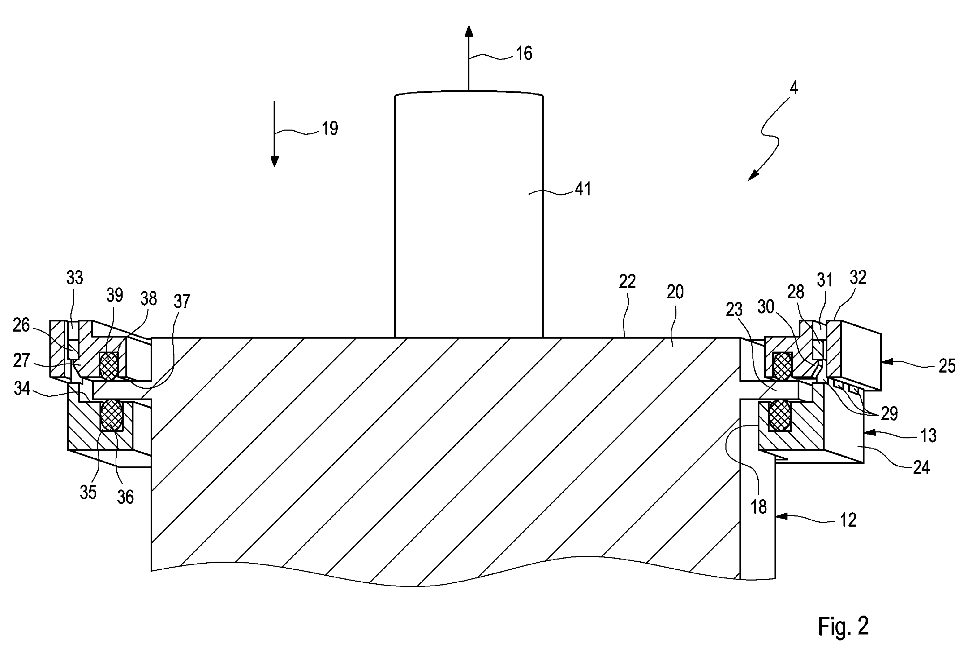

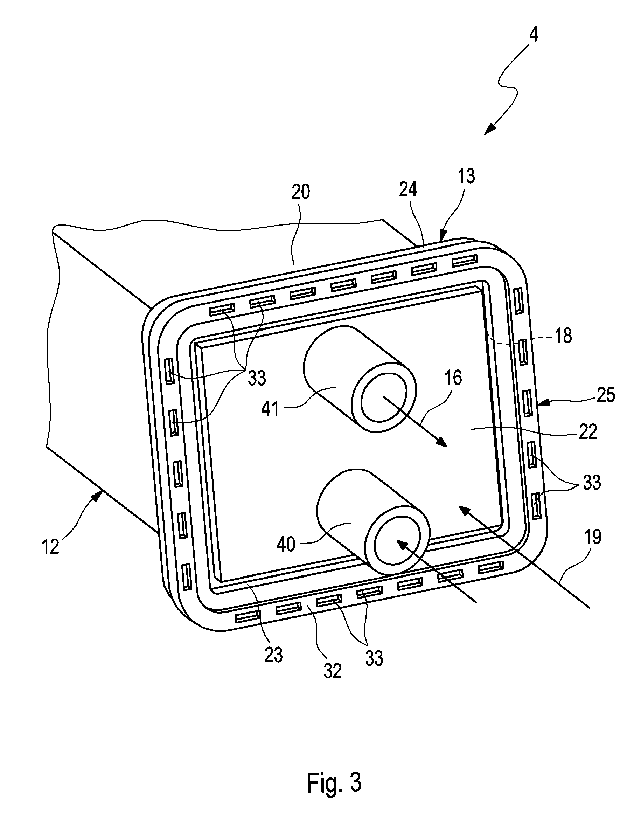

Entsprechend den Figuren 1 bis 3 umfasst das Gehäuse 13 eine Einführöffnung 18, durch die der Ladeluftkühler 12 in einer Einführrichtung 19 oder Einschubrichtung 19 seitlich in das Gehäuse 13 eingesetzt ist. Die Einführrichtung 19 ist dabei quer zum Frischluftpfad 14 orientiert. In den Figuren 2 und 3 ist das Gehäuse 13 nur rudimentär, nämlich nur im Bereich der Einführöffnung 18 dargestellt.

Gemäß Fig. 1 besitzt der Ladeluftkühler 12 einen äußeren Endbereich 20 und einen inneren Endbereich 21, die bezüglich der Einführrichtung 19 distal zueinander bzw. voneinander abgewandt angeordnet sind. Der innere Endbereich 21 geht beim Einsetzen des Ladeluftkühlers 12 in das Gehäuse 13 voraus und befindet sich im eingesetzten Zustand vollständig innerhalb des Gehäuses 13. Im Unterschied dazu bildet der äußere Endbereich 20 im eingesetzten Zustand des Ladeluftkühlers 12 einen Verschluss für die Einführöffnung 18. Zumindest eine vom inneren Endbereich 21 bzw. vom Frischluftpfad 14 abgewandte Stirnseite 22 des Ladeluftkühlers 12, die sich am äußeren Endbereich 20 befindet, verbleibt außerhalb des Gehäuses 13.

Entsprechend den Figuren 2 und 3 weist der äußere Endbereich 20 einen umlaufenden Halteflansch 23 auf, der zum Fixieren des Ladeluftkühlers 12 am Gehäuse 13 im Bereich der Einführöffnung 18 dient. Das Gehäuse 13 besitzt einen die Einführöffnung 18 einfassenden, vollständig umlaufenden Halterand 24. Die hier vorgestellte Frischluftanlage 4 ist außerdem mit einem Halterahmen 25 ausgestattet, der bezüglich des Ladeluftkühlers 12 und bezüglich des Gehäuses 13 ein separates Bauteil ist. Der Halterahmen 25 dient zum Fixieren des Ladeluftkühlers 12 am Gehäuse 13 im Bereich der Einführöffnung 18. Hierzu wird der Halterahmen 25 am Gehäuse 13 befestigt, wobei der Halteflansch 23 in der Einführrichtung 19 zwischen dem Halterahmen 25 und dem Halterand 24 angeordnet und geklemmt ist. Der Halterahmen 25 ist ebenso wie der Halteflansch 23 geschlossen umlaufend konfiguriert. Insbesondere ist der Halterahmen 25 ein einteiliges Spritzformteil aus Kunststoff. Grundsätzlich kann der Halterahmen 25 jedoch auch aus Metall, insbesondere aus Leichtmetall, hergestellt sein.

Am Gehäuse 13 sind im Bereich der Einführöffnung 18 bzw. im Bereich des Halterands 24, Rastelemente 26 vorgesehen. Am Halterahmen 25 sind Gegenrastelemente 27 vorgesehen, die komplementär zu den Rastelementen 26 gestaltet und angeordnet sind. Die Rastelemente 26 und die Gegenrastelemente 27 wirken zum Fixieren des Halterahmens 25 am Gehäuse 13 und zum Klemmen des Halteflansches 23 zusammen. Sofern das Gehäuse 13 aus Kunststoff durch Spritzformen hergestellt ist, sind die Rastelemente 26 zweckmäßig integral daran ausgeformt.

Grundsätzlich können die Rastelemente 26 und die Gegenrastelemente 27 beliebig ausgestaltet sein, solange damit eine Verrastung zwischen Halterahmen 25 und Gehäuse 13 realisierbar ist. Eine derartige Verrastung kann dabei vorzugsweise vollständig ohne zusätzliche Befestigungsmittel auskommen.

Bevorzugt ist dabei die in den Figuren 2 und 3 gezeigte Ausführungsform, bei der die Rastelemente 26 einen Haltekragen 28 aufweisen, der entlang des Halterands 24 vorzugsweise geschlossen umläuft und dabei vom Gehäuse 13 nach außen absteht. Der Haltekragen 28 enthält mehrere Rastöffnungen 29, die in der Umfangsrichtung verteilt angeordnet sind. Im Beispiel der Fig. 2 sind die Rastöffnungen 29 als Durchgangsöffnungen konzipiert, die den Haltekragen 28 vollständig durchsetzen. Bei einer anderen Ausführungsform können die Rastöffnungen 29 auch als Vertiefungen konzipiert sein, die den Haltekragen 28 nicht durchdringen. Die Gegenrastelemente 27 umfassen hier Rasthaken 30, die komplementär zu den Rastöffnungen 29 dimensioniert und angeordnet sind und die in die Rastöffnungen 29 eingreifen. Durch die mit den Rastöffnungen 29 verrastenden Rasthaken 30 wird der Halterahmen 25 letztlich am Haltekragen 28 und somit am Gehäuse 13 fixiert. Der Haltekragen 28 ist vorzugsweise integral am Gehäuse 13 ausgeformt.

Der Halterahmen 25 kann eine umlaufende Rastnut 31 aufweisen, die zum Gehäuse 13 hin offen ist und in der die Rasthaken 30 angeordnet sind. Die Rastnut 31 ist komplementär zum Haltekragen 28 geformt und angeordnet, so dass beim Anbringen des Halterahmens 25 am Gehäuse 13 der Haltekragen 28 in der Einschubrichtung 19 in die Rastnut 31 eintaucht. Der Halterahmen 25 kann im Bereich der Rastnut 31 an einer vom Gehäuse 13 abgewandten Außenseite 32 mehrere Durchbrüche 33 aufweisen. Diese Durchbrüche 33 können dabei insbesondere so dimensioniert und angeordnet sein, dass durch die Durchbrüche 33 hindurch mit einem entsprechenden Werkzeug die Verrastungen zwischen den einzelnen Rasthaken 30 und den zugehörigen Rastöffnungen 29 gelöst werden können.

Wie sich Fig. 2 ferner entnehmen lässt, kann der Halterand 24 an einer dem Halteflansch 23 zugewandten Außenseite 34 eine vollständig umlaufende Dichtungsnut 35 aufweisen, die zum Halteflansch 23 hin offen ist. In dieser gehäuseseitigen Dichtungsnut 35, die im Folgenden als Gehäusedichtungsnut 35 bezeichnet wird, ist eine Gehäusedichtung 36 angeordnet, die bezüglich der Einführrichtung 19 als Axialdichtung wirkt und am Halteflansch 23 zur Anlage kommt. Bei der hier gezeigten Ausführungsform weist der Halterahmen 25 an einer dem Halteflansch 23 zugewandten Innenseite 37 eine vollständig umlaufende Dichtungsnut 38 auf, die zum Halteflansch 23 hin offen ist. In dieser rahmenseitigen Dichtungsnut 38, die im Folgenden als Rahmendichtungsnut 38 bezeichnet wird, ist eine Rahmendichtung 39 angeordnet, die bezüglich der Einführrichtung 19 als Axialdichtung wirkt und am Halteflansch 23 zur Anlage kommt.

Entsprechend Fig. 3 sind am äußeren Endbereich 20 und vorzugsweise an der äußeren Stirnseite 22 des Ladeluftkühlers 12 ein Zuführanschluss 40 zum Zuführen eines Kühlmittels zum Ladeluftkühler 12 und ein Abführanschluss 41 zum Abführen des Kühlmittels vom Ladeluftkühler 12 angeordnet. Dabei ist die Stirnseite 22, welche die beiden Kühlmittelanschlüsse 40, 41 enthält, vom Halteflansch 23 eingefasst und dementsprechend auch vom Halterahmen 25 eingefasst.

Wie sich Fig. 1 entnehmen lässt, kann das Gehäuse 13 an einer der Einführöffnung 18 gegenüberliegenden Wand 42 Positionierelemente 43 aufweisen. Diese wirken im eingesetzten Zustand des Ladeluftkühlers 12 mit dem inneren Endbereich 21 zum Positionieren des Ladeluftkühlers 12 im Gehäuse 13 zusammen.

## Patentansprüche

1. Frischluftanlage zur Versorgung von Brennräumen (3) einer aufgeladenen Brennkraftmaschine (1) mit Frischluft,
- mit einem Gehäuse (13), durch das ein Frischluftpfad (14) hindurchführt,
- mit einem Ladeluftkühler (12), der von der Frischluft durchströmbar im Frischluftpfad (14) angeordnet ist,
- wobei das Gehäuse (13) eine Einführöffnung (18) aufweist, die von einem Halterand (24) eingefaßt ist und durch die der Ladeluftkühler (21) quer zum Frischluftpfad (14) seitlich in das Gehäuse (13) eingesetzt ist,
- wobei ein äußerer Endbereich (20) des Ladeluftkühlers (12) die Einführöffnung (18) verschließt und einen Zuführanschluss (40) zum Zuführen eines Kühlmittels zum Ladeluftkühler (12) und einen Abführanschluss (41) zum Abführen des Kühlmittels vom Ladeluftkühler (12) sowie einen umlaufenden Halteflansch (23) aufweist,
**gekennzeichnet durch** einen bezüglich des Gehäuses (13) und des Ladeluftkühlers (12) separaten Halterahmen (25), wobei der Halteflansch (23) zwischen dem Halterand (24) und dem Halterahmen (25) geklemmt ist.

2. Frischluftanlage nach Anspruch 1,
**dadurch gekennzeichnet,**
**dass** der Halterahmen (25) geschlossen umlaufend ausgestaltet ist.

3. Frischluftanlage nach Anspruch 1 oder 2,
**dadurch gekennzeichnet,**
**dass** im Bereich des Halterahmens (25) am Gehäuse (13) Rastelemente (26) vorgesehen sind, die mit am Halterahmen (25) ausgebildeten Gegenrastelementen (27) zum Fixieren des Halterahmens (25) am Gehäuse (13) und zum Klemmen des Halteflansches (23) zusammenwirken.

4. Frischluftanlage nach Anspruch 3,
**dadurch gekennzeichnet,**
**dass** die Rastelemente (26) integral am Gehäuse (13) ausgeformt sind.

5. Frischluftanlage nach Anspruch 3 oder 4,
**dadurch gekennzeichnet,**
- **dass** die Rastelemente (26) einen entlang des Halterands (24) umlaufenden, vom Gehäuse (13) nach außen abstehenden Haltekragen (28) aufweisen, der mehrere Rastöffnungen (29) enthält,
- **dass** die Gegenrastelemente (27) zu den Rastöffnungen (29) komplementäre Rasthaken (30) aufweisen, die in die Rastöffnungen (29) eingreifen und den Halterahmen (25) am Haltekragen (28) fixieren.

6. Frischluftanlage nach Anspruch 5,
**dadurch gekennzeichnet,**
**dass** der Halterahmen (25) eine umlaufende Rastnut (31) aufweist, in der die Rasthaken (30) angeordnet sind und in die der Haltekragen (28) eintaucht.

7. Frischluftanlage nach einem der Ansprüche 1 bis 6,
**dadurch gekennzeichnet,**
**dass** der Halterand (24) an einer dem Halteflansch (23) zugewandten Außenseite (34) eine umlaufende Dichtungsnut (35) aufweist, in der eine am Halteflansch (23) anliegende Dichtung (36) angeordnet ist.

8. Frischluftanlage nach einem der Ansprüche 1 bis 7,
**dadurch gekennzeichnet,**
**dass** der Halterahmen (25) an einer dem Halteflansch (23) zugewandten Innenseite (37) eine umlaufende Dichtungsnut (38) aufweist, in der eine am Halteflansch (23) anliegende Dichtung (39) angeordnet ist.

9. Frischluftanlage nach einem der Ansprüche 1 bis 8,
**dadurch gekennzeichnet,**
**dass** das Gehäuse (13) an einer der Einführöffnung (18) gegenüberliegenden Wand (42) Positionierelemente (43) aufweist, die mit einem inneren Endbereich (21) des Ladeluftkühlers (12) zum Positionieren des Ladeluftkühlers (12) im Gehäuse (13) zusammenwirken.

## Claims

1. A fresh air system for supplying combustion chambers (3) of a supercharged internal combustion engine (1) with fresh air,
- with a housing (13), through which a fresh air path (14) is routed,
- with a charge air cooler (12), which, subject to the fresh air through-flow, is arranged in the fresh air path (14),
- wherein the housing (13) comprises an insertion opening (18), which is enclosed by a holding rim (24), and through which the charge air cooler (21) is laterally inserted into the housing (13) transversely to the fresh air path (14),
- wherein an outer end region (20) of the charge air cooler (12) closes off the insertion opening (18) and comprises a feed connection (40) for feeding a coolant to the charge air cooler (12), a discharge connection (41) for discharging the coolant from the charge air cooler (12), and a circumferential holding flange (23),
**characterized by**
a holding frame (25), which is separate relating to the housing (13) and the charge air cooler (12), wherein the holding flange (23) is clamped between the holding rim (24) and the holding frame (25).

2. The fresh air system according to Claim 1,
**characterized in that**
the holding frame (25) is configured closed circumferentially.

3. The fresh air system according to Claim 1 or 2,
**characterized in that**
in the region of the holding frame (25) engagement elements (26) are provided on the housing (13), which interact with counterpart engagement elements (27) formed on the holding frame (25) for fixing the holding frame (25) on the housing (13) and for clamping the holding flange (23).

4. The fresh air system according to Claim 3,
**characterized in that**
the engagement elements (26) are integrally moulded on the housing (13).

5. The fresh air system according to Claim 3 or 4,
**characterized in that**
- the engagement elements (26) comprise a circumferential holding collar (28) along the holding rim (24) which projects from the housing (13) to the outside, which comprises a plurality of engagement openings (29),
- the counterpart engagement elements (27) have engagement hooks (30) which are complementary to the engagement openings (29), which engage into the engagement openings (29) and fix the holding frame (25) on the holding collar (28).

6. The fresh air system according to Claim 5,
**characterized in that**
the holding frame (25) comprises a circumferential engagement groove (31), in which the engagement hooks (30) are arranged and into which the holding collar (28) dips.

7. The fresh air system according to any one of the Claims 1 to 6,
**characterized in that**
the holding rim (24) on an outside (34) facing the holding flange (23) comprises a circumferential sealing groove (35), in which a seal (36) bearing against the holding flange (23) is arranged.

8. The fresh air system according to any one of the Claims 1 to 7,
**characterized in that**
the holding frame (25) on an inner side (37) facing the holding flange (23) comprises a circumferential sealing groove (38), in which a seal (39) bearing against the holding flange (23) is arranged.

9. The fresh air system according to any one of the Claims 1 to 8,
**characterized in that**
the housing (13) on a wall (42) located opposite the insertion opening (18) comprises positioning elements (43), which interact with an inner end region (21) of the charge air cooler (12) for positioning the charge air cooler (12) in the housing (13).

## Revendications

1. Installation d'air frais pour l'alimentation de chambres de combustion (3) d'un moteur à combustion interne (1) suralimenté avec de l'air frais,
- avec un boîtier (13), par lequel une voie d'air frais (14) passe,
- avec un refroidisseur d'air de suralimentation (12) qui est agencé de manière à pouvoir être traversé par de l'air frais dans la voie d'air frais (14),
- le boîtier (13) présentant une ouverture d'introduction (18) qui est entourée par un bord de retenue (24) et par laquelle le refroidisseur d'air de suralimentation (21) est inséré transversalement à la voie d'air frais (14) latéralement dans le boîtier (13),
- une zone d'extrémité (20) extérieure du refroidisseur d'air de suralimentation (12) fermant l'ouverture d'introduction (18) et présentant un raccord d'amenée (40) pour l'amenée d'un agent de refroidissement vers le refroidisseur d'air de suralimentation (12) et un raccord d'évacuation (41) pour l'évacuation de l'agent de refroidissement du refroidisseur d'air de suralimentation (12) ainsi qu'une bride de retenue tournante (23),
**caractérisée par** un cadre de retenue (25) séparé par rapport au boîtier (13) et au refroidisseur d'air de suralimentation (12), la bride de retenue (23) étant serrée entre le bord de retenue (24) et le cadre de retenue (25).

2. Installation d'air frais selon la revendication 1,
**caractérisée en ce**
**que** le cadre de retenue (25) est configuré de manière fermée et tournante.

3. Installation d'air frais selon la revendication 1 ou 2,
**caractérisée en ce**
**que** des éléments d'encliquetage (26) sont prévus dans la zone du cadre de retenue (25) sur le boîtier (13), lesquels coagissent avec des éléments d'encliquetage antagonistes (27) réalisés sur le cadre de retenue (25) pour la fixation du cadre de retenue (25) sur le boîtier (13) et pour le serrage de la bride de retenue (23).

4. Installation d'air frais selon la revendication 3,
**caractérisée en ce**
**que** les éléments d'encliquetage (26) sont formés intégralement sur le boîtier (13).

5. Installation d'air frais selon la revendication 3 ou 4,
**caractérisée en ce**
- **que** les éléments d'encliquetage (26) présentent un collet de retenue (28) tournant le long du bord de retenue (24), dépassant vers l'extérieur du boîtier (13), qui contient plusieurs ouvertures d'encliquetage (29),
- **que** les éléments d'encliquetage antagonistes (27) présentent des crochets d'encliquetage (30) complémentaires aux ouvertures d'encliquetage (29), qui s'engagent dans les ouvertures d'encliquetage (29) et fixent le cadre de retenue (25) sur le collet de retenue (28).

6. Installation d'air frais selon la revendication 5,
**caractérisée en ce**
**que** le cadre de retenue (25) présente une rainure d'encliquetage (31) tournante dans laquelle les crochets d'encliquetage (30) sont agencés et dans laquelle le collet de retenue (28) s'enfonce.

7. Installation d'air frais selon l'une quelconque des revendications 1 à 6,
**caractérisée en ce**
**que** le bord de retenue (24) présente, sur un côté extérieur (34) tourné vers la bride de retenue (23), une rainure de garniture (35) tournante, dans laquelle une garniture (36) reposant contre la bride de retenue (23) est agencée.

8. Installation d'air frais selon l'une quelconque des revendications 1 à 7,
**caractérisée en ce**
**que** le cadre de retenue (25) présente sur un côté intérieur (37) tourné vers la bride de retenue (23) une rainure de garniture (38) tournante, dans laquelle une garniture (39) reposant sur la bride de retenue (23) est agencée.

9. Installation d'air frais selon l'une quelconque des revendications 1 à 8,
**caractérisée en ce**
**que** le boîtier (13) présente, sur une paroi (42) en regard de l'ouverture d'introduction (18), des éléments de positionnement (43) qui coagissent avec une zone d'extrémité (21) intérieure du refroidisseur d'air de suralimentation (12) pour le positionnement du refroidisseur d'air de suralimentation (12) dans le boîtier (13).
